# EUROPÄISCHE PATENTSCHRIFT

(11) **EP 0 570 651 B1**
(45) Veröffentlichungstag und Bekanntmachung des Hinweises auf die Patenterteilung: **16.07.1997**
(21) Anmeldenummer: 92810392.8
(22) Anmeldetag: 22.05.1992
(51) Int. Cl.: G03B 27/58, B65H 1/28, B65H 16/04, B65H 35/06, B65H 16/02

(54) **Kopiergerät zum Aufkopieren von Kopiervorlagen auf blattartiges Kopiermaterial**
Copying device for copying of originals onto sheet-like copying material
Appareil à copier pour copier des originaux sur du matériau en feuilles pour l'enregistrement

(43) Veröffentlichungstag der Anmeldung: 24.11.1993
(73) Patentinhaber: GRETAG IMAGING AG, CH-8105 Regensdorf (CH)
(72) Erfinder: Kunz, Jürg, 8180 Bülach (CH); Knecht, Hugo, 8165 Schöfflisdorf (CH); Binder, Erich, 8107 Buchs (CH)
(74) Vertreter: Schwabe - Sandmair - Marx

(56) Entgegenhaltungen:
- EP-A- 0 367 879
- WO-A-88/09762
- DE-A- 2 906 042
- DE-A- 3 943 160
- DE-B- 1 219 048
- US-A- 4 442 744
- US-A- 4 849 792
- PATENT ABSTRACTS OF JAPAN vol. 10, no. 96 (M-469)(2153) 12. April 1986 & JP-A-60 232 337

## Beschreibung

Die Erfindung betrifft ein Kopiergerät zum Aufkopieren von Kopiervorlagen auf blattartiges Kopiermaterial gemäss dem Oberbegriff des unabhängigen Patentanspruchs.

Kopiergeräte zum Aufkopieren von Kopiervorlagen sind heutzutage besonders in Fotolabors in zahlreichen Ausführungen im Einsatz, wobei die Kopiervorlagen dort üblicherweise Positiv- oder Negativfilme sind und das Kopiermaterial ein Fotopapier ist. Während in den am meisten verbreiteten Kopiergeräten in aller Regel lange Papierbänder verarbeitet werden, ist es für einige Anwendungen wünschenswert, auf einzelne Blätter aufkopieren zu können. Insbesondere sind hierbei besondere Vergrösserungen von einzelnen Negativ- oder Positivvorlagen erwähnenswert, die von den Kunden in zunehmendem Masse gewünscht werden.

Bisher erfolgt die Erstellung solcher Kopien derart, dass ein einziger Vorratsspeicher das Kopiermaterial (Papier) bereitstellt und eine Zuführeinrichtung das Kopiermaterial zu der Belichtungseinrichtung transportiert, wo das Aufkopieren der Vorlage (z.B. Negativ) auf das Papier erfolgt. Dadurch können alle Einheiten (Vorratsspeicher, Zuführeinrichtung, Belichtungseinrichtung) ortsfest in dem Kopiergerät angeordnet werden. Allerdings ist es auf diese Weise auch nur möglich, auf Papier mit ein- und derselben Breite und auf ein-und dieselbe Papiersorte aufzukopieren. Soll ein breiteres oder schmaleres Papier oder auch eine andere Papiersorte (z.B. eine Papiersorte, die mit einer anderen Emulsion beschichtet ist) verwendet werden, so muss der Betrieb des Geräts unterbrochen und die im Gerät befindliche Kassette gegen eine Kassette mit dem gewünschten anderen Papier ausgetauscht werden. Alternativ müssen mehrere Kundenaufträge, die das gleiche Papier benötigen, zusammengefasst werden, und die Kopien auf verschiedene Papierbreiten müssen in mehreren nacheinander folgenden Durchgängen erstellt werden. Dies kann aber des öfteren in unkorrekter Bearbeitung der Kundenaufträge resultieren (z.B. werden Bilder vergessen, etc.). Bei der Vielfalt der verschiedenen Kundenwünsche alleine hinsichtlich der unterschiedlichen Abmessungen der gewünschten Kopien muss der Betrieb eines solchen Kopiergeräts recht häufig unterbrochen und ein Vorratsspeicher mit der jeweils gewünschten Papierbreite in das Gerät eingesetzt werden, um die entsprechenden Kopien mit den jeweils gewünschten Abmessungen erstellen zu können. Dies beeinträchtigt die Effizienz eines solchen Geräts recht erheblich.

In der DE-A-29 06 042 wird daher ein Gerät vorgeschlagen, speziell handelt es sich dabei um eine Projektions- bzw. Reproduktionskamera, bei der (mindestens) zwei Magazine mit Kopiermaterial unterschiedlichen Typs, im genannten Falle Rollfilme, bereitgestellt werden. Die Magazine können manuell seitlich verschoben werden, sodass jeweils das Magazin, das den gewünschten Typ Rollfilm enthält, in die Position gebracht werden kann, in der das darin enthaltene Kopiermaterial zum Aufbelichten verwendet wird.

Ausserdem ist aus der DE-A-39 43 160 eine Vorrichtung zur automatischen Zufuhr von Einzelblättern zu einer Büromaschine bekannt. In der dort beschriebenen Vorrichtung werden Blätter verschiedenen Formats bereitgestellt. Mit Hilfe eines verschiebbaren Schlittens wird das jeweils zuoberst liegende bzw. vorne liegende Blatt abgehoben und der Büromaschine zugeführt.

Aufgabe der Erfindung ist es nun, ein Kopiergerät vorzuschlagen, bei dem es möglich ist, Kopien unterschiedlicher Formate und auf unterschiedliche Sorten von Kopiermaterial (z.B. auf eine Papiersorte, die mit einer anderen Emulsion beschichtet ist) zu erstellen, ohne dass der Betrieb des Geräts bei jedem Wechsel des Kopiermaterials unterbrochen werden muss und der Vorratsspeicher (Kassette) ausgetauscht werden muss, sei es, um auf ein Kopiermaterial anderer Breite zu kopieren und/oder um eine andere Papiersorte zu verwenden. Ferner soll das Gerät in hohem Masse betriebssicher sein.

Erfindungsgemäss wird diese Aufgabe gemäss dem unabhängigen Patentanspruch durch eine Vorrichtung gelöst, bei der der Vorratsspeicher eine Anordnung von mehreren Kassetten umfasst, deren Kassettenmäuler quer zur Transportrichtung des Kopiermaterials nebeneinander angeordnet sind. Die Zuführeinrichtung umfasst einen quer zur Transportrichtung des Kopiermaterials verschiebbaren Schlitten, der das Kopiermaterial vom jeweiligen Kassettenmaul zur Belichtungseinrichtung transportiert. Dadurch können mehrere Kopiermaterialien verwendet werden, ohne dass der Betrieb des Geräts unterbrochen werden muss und eine Kassette mit dem jeweils gewünschten Kopiermaterial eingesetzt werden muss. So ist es möglich, Papier mit unterschiedlicher Breite bereitzustellen und/oder eine andere Papiersorte zu verwenden (z.B. Papier, das mit einer anderen Emulsion beschichtet ist). Dadurch kann die Effizienz des Geräts erheblich gesteigert werden.

Die zu einer Kassettenanordnung gehörigen Kassetten sind dabei an eine Trennwand fest ankoppelbar, wobei in der Trennwand eine Öffnung für das jeweilige Kassettenmaul vorgesehen ist, durch die hindurch das Kassettenmaul geführt ist. Auf diese Weise sind die Kassetten leicht ankoppelbar, bei Bedarf leicht auswechselbar und bedürfen in Bezug auf den Schlitten keiner besonderen Justage, da der Schlitten in einem festen Abstand von der Trennwand verschiebbar angeordnet ist und somit die Kassette mit dem Ankoppeln an die Trennwand automatisch den korrekten Abstand zum Schlitten hat. Ausserdem kann die Trennwand auch zum Abschirmen des Innenraums gegen Licht von aussen dienen.

Auf der dem Schlitten zugewandten Seite der Trennwand sind Leitbleche vorgesehen, zwischen denen das Ende des aus der jeweiligen Kassette kommenden Kopiermaterials geführt ist. In diesen Leitblechen sind auf der dem Schlitten zugewandten Seite Aussparungen vorgesehen, in welche die am Schlitten vorgesehenen Transportwalzen eingreifen und das Kopiermaterial aus dem jeweiligen Kassettenmaul herausziehen. Zur Belichtung des Papiers wird das herausgezogene Kopiermaterial zur Belichtungseinrichtung transportiert, während das nachfolgende Kopiermaterial wieder zwischen den Leitblechen gehalten wird. Wird dieses Papierformat erneut benötigt, so können die weggeschwenkten Transportwalzen des Schlittens wieder in die Aussparung eingefahren werden, zum Kopiermaterial hingeschwenkt werden, das Ende des Kopiermaterials einklemmen und dieses zur Belichtungseinrichtung transportieren. Das Ende des nachfolgenden Kopiermaterials wird wieder zwischen den Leitblechen gehalten usw.. Dadurch wird eine hohe Betriebssicherheit gewährleistet und ein sicherer Zugriff auf das jeweils gewünschte Papier ermöglicht, da das Ende des Kopiermaterials jeweils in einer definierten Stellung zwischen den Leitblechen gehalten wird.

Bei einer Weiterbildung des erfindungsgemässen Kopiergeräts ist mindestens eine weitere Anordnung solcher Kassetten oberhalb oder unterhalb der ersten Kassettenanordnung vorgesehen. Dadurch kann eine noch grössere Anzahl von Papiersorten sowohl hinsichtlich anderer Papierbreite als auch hinsichtlich einer anderen Emulsion bereitgestellt werden, so dass die allermeisten Kundenwünsche bearbeitet werden können, ohne dass der Betrieb des Geräts unterbrochen und eine entsprechende Kassette in das Gerät eingesetzt werden muss. Zusätzlich wird bei dieser Art der Anordnung die Zugriffszeit auf die jeweilige Papiersorte vergleichsweise gering gehalten und gleichzeitig der Innenraum des Kopiergeräts gut ausgenutzt. Dadurch wird die Effizienz des Kopiergeräts weiter gesteigert und gleichzeitig werden die Abmessungen des Kopiergeräts nicht unnötig vergrössert, so dass auch der Platzbedarf eines solchen Geräts gering gehalten wird.

Besonders praktikabel in Bezug auf Zugriffszeiten und auf eine praktikable Anzahl an bereitgestellten Papiersorten ist ein Kopiergerät, bei dem eine Kassettenanordnung jeweils vier nebeneinander angeordnete Kassetten umfasst. Ausserdem bleiben die Abmessungen des Kopiergeräts dabei vergleichsweise gering, was ausser den obengenannten Vorteilen hinsichtlich Nutzung des Innenraums des Geräts und hinsichtlich der geringen Zugriffszeit auch noch Vorteile hat im Hinblick auf die Auslieferung eines solchen Geräts. Vergrössert man nämlich die Breite eines solchen Geräts allzu sehr, so passen die Geräte teilweise nicht durch Türen. Hält man hingegen die Abmessungen des Geräts in bestimmten Grenzen, so kann das Kopiergerät einfach durch die Tür hindurch in den gewünschten Raum geschoben werden, in dem es aufgestellt bleiben soll.

Bei einem weiteren Ausführungsbeispiel des erfindungsgemässen Kopiergeräts umfasst die Zuführeinrichtung für jede Kassettenanordnung einen separaten Schlitten. Diese Massnahme gewährleistet ein Höchstmass an Effizienz hinsichtlich der Zugriffszeit auf die jeweilis gewünschte Papiersorte.

Dabei umfasst eine Kassettenanordnung zweckmässigerweise Kassetten mit unterschiedlichen Kopiermaterialbreiten und/oder unterschiedlichen Kopiermaterialsorten (z.B. hinsichtlich der auf das Papier aufgebrachten Emulsion).

Bei einem besonders zweckmässigen Ausführungsbeispiel des erfindungsgemässen Kopiergeräts ist innerhalb einer Kassettenanordnung die Kassette mit der grössten Kopiermaterialbreite an dem Rand der Kassettenanordnung angeordnet, der am weitesten von der Belichtungseinrichtung entfernt ist. Diese Anordnung der Kassetten ist deshalb vorteilhaft, weil die grössten Formate vergleichsweise seltener gewünscht werden und ausserdem die Belichtungszeit bei den grössten Formaten bei gleicher Lichtquelle natürlich länger ist. In dieser längeren Belichtungszeit kann aber der Schlitten bereits das nächste gewünschte Papier zur Belichtungseinrichtung transportieren. Bei den kleineren Formaten bleibt dem Schlitten für das Herbeitransportieren vergleichsweise weniger Zeit, da die Zeitdauer für das Aufbelichten bei kleinen Formaten entsprechend kürzer ist.

Bei einem weiteren Ausführungsbeispiel des erfindungsgemässen Kopiergeräts ist der Schlitten mit mehreren Transportwalzenpaaren versehen, wobei zumindest dasjenige Transportwalzenpaar, das am nächsten zum Kassettenmaul angeordnet ist, von beiden Seiten des Kopiermaterials her vom Kopiermaterial weg schwenkbar bzw. zum Kopiermaterial hin schwenkbar ist, so dass es das Kopiermaterial freigibt bzw. es zum Transport aus dem Kassettenmaul herauszieht und es zwischen den Transportwalzen führt. Dies ermöglicht ein einfaches "Einklemmen" und Transportieren des Papiers zwischen den Transportwalzen von der jeweiligen Kassette zur Belichtungseinrichtung. Gleichzeitig ist ein einfaches Wechseln des Papiers möglich: Das dem Kassettenmaul nächstgelegene Transportwalzenpaar wird vom Kopiermaterial weggeschwenkt, der Schlitten fährt zu der Kassette, in der das nächste gewünschte Papier enthalten ist, das Transportwalzenpaar wird wieder zum Kopiermaterial hingeschwenkt, klemmt es zwischen den Transportwalzen ein und transportiert es zur Belichtungseinrichtung.

Ein weiteres Ausführungsbeispiel des erfindungsgemässen Kopiergeräts ist dadurch gekennzeichnet, dass das Kopiermaterial in den Kassetten in Form eines langen Bands gespeichert ist, und dass der Schlitten mit einer Schneideinrichtung versehen ist, welche nach dem Herausziehen einer vorgegebenen Länge an Kopiermaterial das Band zu einem blattartigen Stück schneidet und das geschnittene blattartige Stück dann der Belichtungseinrichtung zuführt. Das Papier kann so in Form eines langen Bands in den einzelnen Kassetten gespeichert werden - es muss nicht bereits im gewünschten Format in der Kassette bereitgestellt werden. Erst in dem Augenblick, in dem das Blatt benötigt wird, wird das Papierband um eine vorgegebene Länge herausgezogen und ein blattartiges Stück abgeschnitten.

Im folgenden wird die Erfindung anhand der Zeichnung näher erläutert. Es zeigen, teilweise in Schnittdarstellung:
- Fig. 1: einen Ausschnitt des schematischen Aufbaus eines Ausführungsbeispiels des erfindungsgemässen Kopiergeräts im Längsschnitt,
- Fig. 2: den Ausschnitt des schematischen Aufbaus des Kopiergeräts aus Fig. 1 in einer Aufsicht,
- Fig. 3: eine perspektivische Explosionsdarstellung von wesentlichen Teilen des Kopiergeräts gemäss der Fig. 1 (ohne Gehäuse),
- Fig. 4: einen Ausschnitt des schematischen Aufbaus eines weiteren Ausführungsbeispiels des Kopiergeräts mit einer über der ersten Kassettenanordnung angeordneten weiteren Kassettenanordnung,
- Fig. 5: eine vergrösserte Darstellung der Trennwand mit angekoppelten Kassetten und Leitblechen, die auf der dem Schlitten zugewandten Seite der Trennwand vor dem jeweiligen Kassettenmaul angeordnet sind,
und
- Fig. 6 a-e: den schematischen Ablauf beim Herausziehen und Abschneiden des Papiers aus der jeweiligen Kassette.

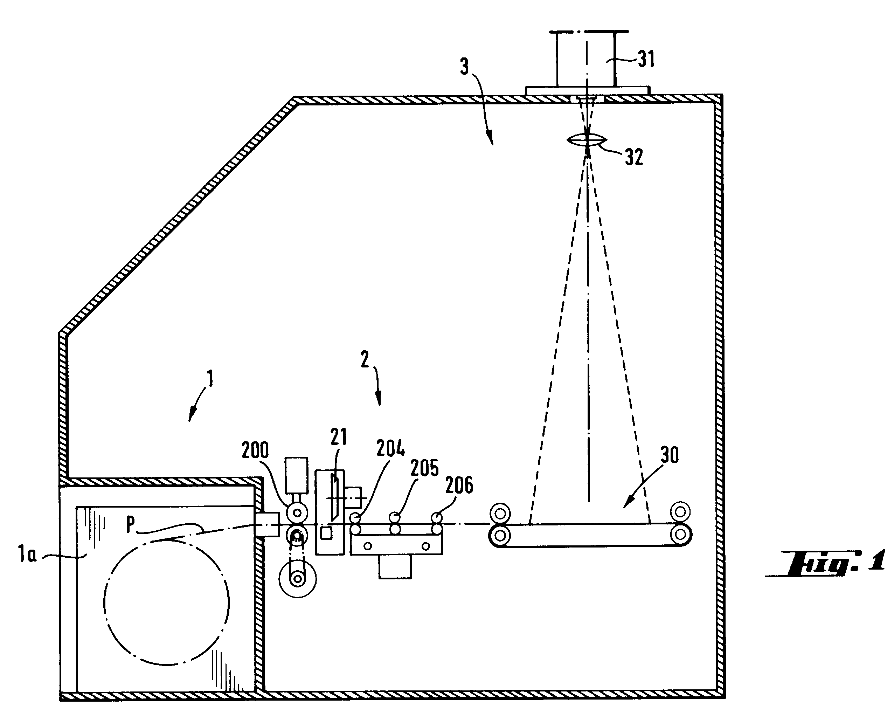

In dem schematischen Aufbau eines Ausschnitts aus dem erfindungsgemässen Kopiergerät, wie es in dem Ausführungsbeispiel in Fig. 1 dargestellt ist, erkennt man einen Vorratsspeicher 1 für Kopiermaterial, beispielsweise für Fotopapier, wobei hier nur eine Kassette erkennbar ist, eine Zuführeinrichtung 2 zum Zuführen des Papiers auf die Papierbühne 30 einer Belichtungseinrichtung 3, von der hier auch die Lichtquelle 31 und eine Abbildungsoptik 32 schematisch angedeutet sind.

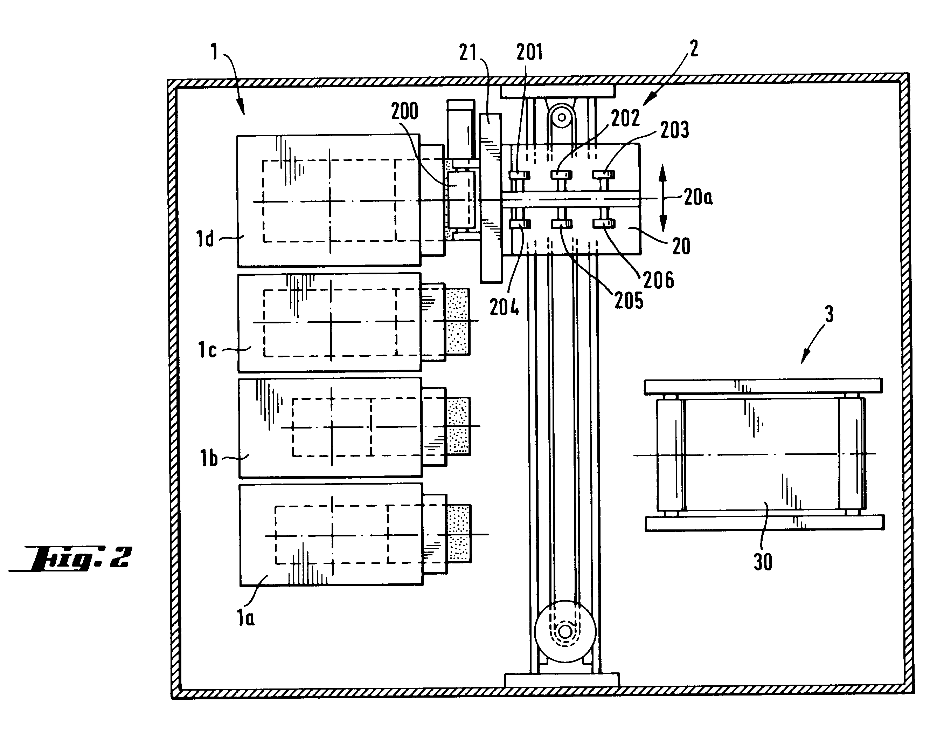

Aus der Aufsicht auf diesen Ausschnitt des Kopiergeräts in Fig. 2 ist erkennbar, dass der Vorratsspeicher 1 mehrere nebeneinander angeordnete Kassetten umfasst. In dem in Fig. 2 dargestellten Ausführungsbeispiel sind dies vier Kassetten 1a,1b,1c und 1d. Es liegt für den Fachmann aber auf der Hand, dass es auch mehr als vier oder weniger als vier Kassetten sein können, besonders dann, wenn die Abmessungen des Gehäuseinnenraums dies ermöglichen bzw erfordern. Ferner erkennt man in der Aufsicht den quer zur Transportrichtung des Fotopapiers verschiebbaren Schlitten 20, der bis vor das Kassettenmaul der jeweiligen Kassette verschiebbar ist und der sich hier vor dem Kassettenmaul der Kassette 1d befindet, die am weitesten von der Papierbühne 30 entfernt angeordnet ist. In dieser Kassette ist das Papier mit der grössten Papierbreite gespeichert. Ferner erkennt man in Fig. 2 auch noch die Schneideinrichtung 21, sowie die Transportwalzenpaare 200,201,202,203,204,205 und 206, bzw. jeweils nur deren obere Transportwalze. Auf die Schneideinrichtung 21 sowie auf die Transportwalzenpaare und deren Wirkungsweise wird später noch genauer eingegangen.

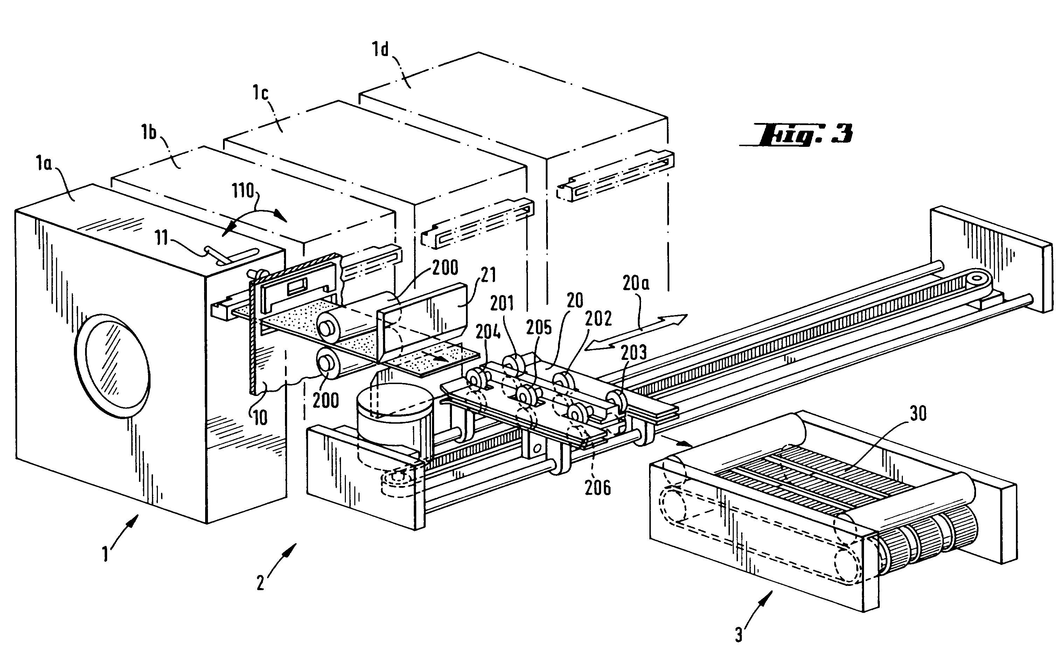

Fig. 3 zeigt wesentliche Teile noch einmal in einer perspektivischen Ansicht in einer Art Explosionsdarstellung. Dabei ist der Einfachheit halber auf die Darstellung des Gehäuses und der Lichtquelle 31 verzichtet worden, ebenso auf die Darstellung der Abbildungsoptik 32 (Fig.1). Von der Belichtungseinrichtung 3 (Fig.1) ist lediglich die Papierbühne 30 dargestellt. Dafür wurde aber ein weiteres Detail einer Ausführungsvariante dargestellt, nämlich eine Trennwand 10, die hier allerdings aus zeichnerischen Gründen nur ausschnittsweise angedeutet ist. An diese Trennwand sind die Kassetten 1a-1d ankoppelbar, wobei das Kassettenmaul der jeweiligen Kassette durch eine entsprechende Öffnung in der Trennwand 10 durchgeführbar ist. Um deutlich zu machen, dass die Kassetten 1a-1d an diese Trennwand 10 ankoppelbar sind, ist in Fig. 3 ein Mechanismus 11 angedeutet, mit dessen Hilfe das Ankoppeln der Kassette erfolgen kann. Dies wird auch durch den Pfeil 110 symbolisiert. Auf die Trennwand und die Anordnung der Kassette relativ zur Trennwand wird später noch genauer eingegangen. Ferner erkennt man in Fig. 3 noch das Transportwalzenpaar 200, das zum Kassettenmaul am nächsten angeordnet ist, die Schneideinrichtung 21, sowie die Zugwalzenpaare 201-206 des Schlittens 20. Der Pfeil 20a symbolisiert dabei die Verstellbarkeit des Schlittens 20 quer zur Transportrichtung des Papiers.

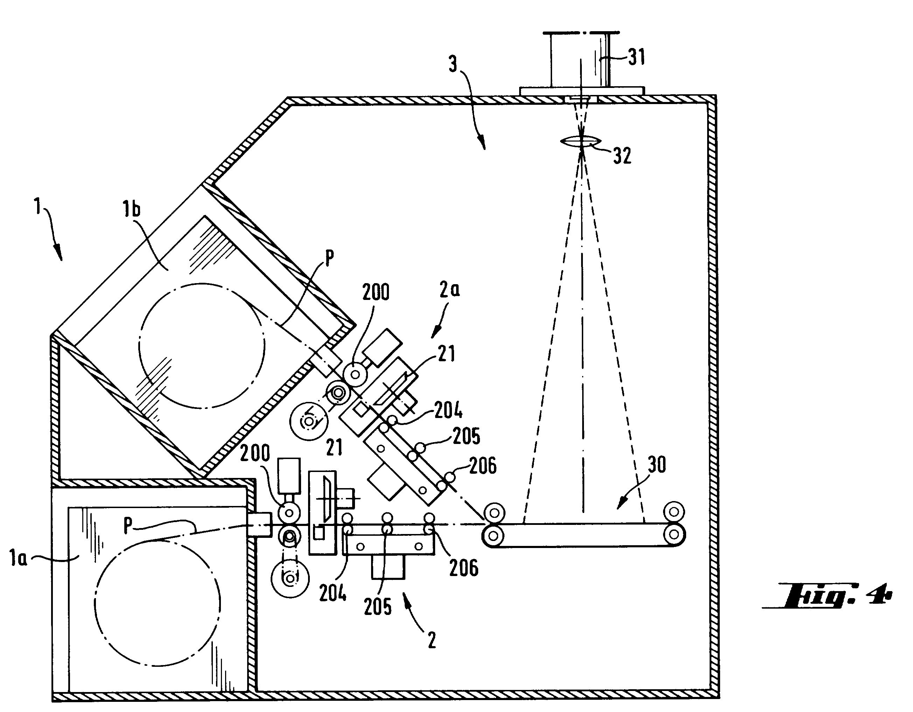

In Fig. 4 ist ein weiteres Ausführungsbeispiel des Kopiergeräts dargestellt, dessen Vorratsspeicher 1 in gleicher Weise wie das in Fig. 1 dargstellte Ausführungsbeispiel eine erste Kassettenanordnung umfasst (Kassetten 1a- 1d in Fig. 1). Zusätzlich zu dieser ersten Kassettenanordnung umfasst der Vorratsspeicher des in Fig. 4 dargestellten Ausführungsbeispiels aber noch eine weitere Kassettenanordnung, die oberhalb der ersten Kassettenanordnung angeordnet ist. Weiterhin umfasst dieses Ausführungsbeispiel eine weitere Zuführeinrichtung 2a für diese weitere Kassettenanordnung. Je nachdem, aus welcher Kassettenanordnung das Papierformat bzw. die Papiersorte (z.B. andere Emulsion) für die nächste Kopie gewünscht wird, führt entweder die Zuführeinrichtung 2 oder die Zuführeinrichtung 2a das entsprechende Papier zur Papierbühne 30. Selbstverständlich kann auch nur eine Zuführeinrichtung vorgesehen sein, die dann entsprechend verschwenkbar sein muss, so dass sie Papier aus beiden Kassettenanordnungen zur Papierbühne 30 führen kann. Der Fachmann erkennt ohne weiteres, dass entsprechend mehr Papiersorten bereitgestellt werden können, indem entweder mehrere Kassetten in jeder Kassettenanordnung bereitgestellt werden oder indem noch zusätzliche Kassettenanordnungen bereitgestellt werden, gegebenenfalls mit einer separaten Zuführeinrichtung für jede Kassettenanordnung.

Beim Betrieb des Kopiergeräts fährt der Schlitten 20 zu der Kassette (in Fig. 2 beispielsweise zur Kassette 1d), in der die jeweilige Papiersorte gespeichert ist, die für die nächste Kopie gewünscht wird. Das Papier ist beispielsweise in Form eines langen aufgerollten Papierbands in der Kassette gespeichert. Das aus dem Kassettenmaul herausragende Papierende wird von dem Transportwalzenpaar 200 des Schlittens 20 eingeklemmt und um eine gewünschte Länge herausgezogen. Anschliessend wird es von der Schneideinrichtung 21 abgeschnitten. Der Schlitten fährt sodann in eine Position, in der er das abgschnittene Blatt der Papierbühne 30 zuführen kann und das abgeschnittene Blatt wird mit Hilfe der Transportwalzenpaare 201-206 des Schlittens 20 der Papierbühne 30 zugeführt. Ist das abgeschnittenen Blatt auf die Papierbühne 30 gelangt, so kann dort die Aufbelichtung der Kopiervorlage (z.B. Negativ) auf das Papier erfolgen. Analoges gilt für das Ausführungsbeispiel der Fig. 4, in der ausser der ersten Kassettenanordnung noch eine weitere Kassettenanordnung oberhalb der ersten Kassettenanordnung vorgesehen ist.

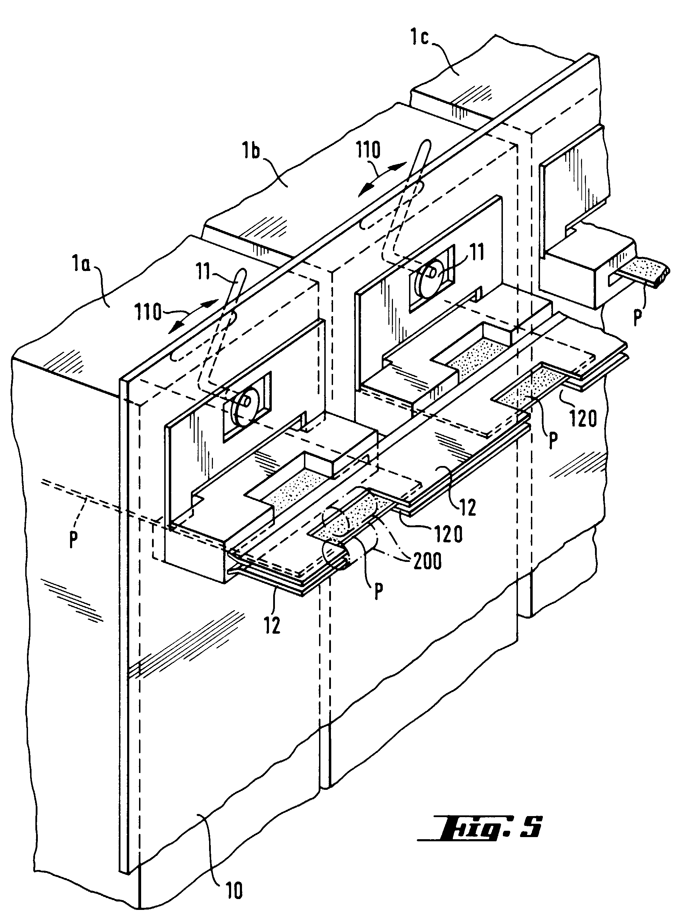

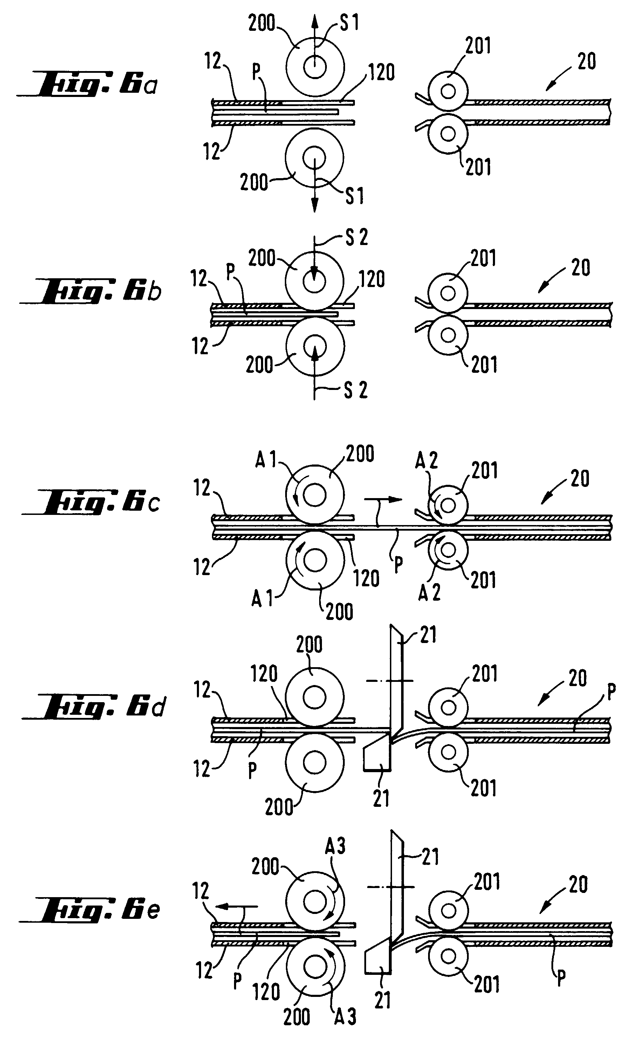

Anhand von Fig. 5 und Fig. 6 soll im folgenden detailliert erläutert werden, wie das Papierende, das aus dem jeweiligen Kassettenmaul herausragt, gehalten und bei Bedarf aus der Kassette herausgezogen und abgeschnitten wird. Dazu ist in Fig. 5 ein Ausschnitt des Ausführungsbeispiels dargestellt, in welchem die Kassetten mittels des Mechanismus' 11 an die Trennwand 10 angekoppelt sind. Das jeweilige Kassettenmaul ist durch eine Öffnung in der Trennwand durchgeführt. Die Trennwand 10 kann so ausser zum Ankoppeln der Kassetten auch zur Abschirmung des Innenraums des Kopiergeräts gegen Licht von aussen dienen. Vor dem jeweiligen Kassettenmaul sind Leitbleche 12 vorgesehen, zwischen denen das Ende des aus dem Kassettenmaul herausragenden Papierbands gehalten wird. Die Leitbleche 12 sind mit Aussparungen 120 versehen, in die die Transportwalzen 200 des Schlittens 20 (Fig. 2) eingreifen können. Um dies zu verdeutlichen, ist in Fig. 5 das Transportwalzenpaar 200 strichliert angedeutet. Der Ablauf beim Eingreifen des Transportwalzenpaars 200, beim Herausziehen des Papiers, beim Abschneiden usw. wird jedoch besser noch aus Fig. 6 (Fig. 6a,6b,6c,6d,6e) deutlich. In Fig. 6a ist zu erkennen, dass die einzelnen Transportwalzen des Transportwalzenpaars 200 von der Transportebene wegschwenkbar sind (Pfeile S1). Sind die Transportwalzen so weit weggeschwenkt, dass ihr tiefster bzw. höchster Punkt sich oberhalb bzw. unterhalb des jeweiligen Leitblechs 12 befindet (Fig. 6a), kann der Schlitten quer verschoben werden, ohne dass die Transportwalzen durch die Leitbleche 12 gehindert werden (siehe Fig. 5). Damit dies möglichst schnell erfolgen kann, sind die Leitbleche möglichst dünn ausgestaltet. Ist der Schlitten bei der gewünschten Kassette angelangt, so werden die Transportwalzen des Transportwalzenpaars 200 zur Transportebene hingeschwenkt (Pfeile S2)und klemmen das Papier P ein (Fig. 6b). Die Walzen werden dann in Richtung der Pfeile A1 angetrieben und ziehen so das Papier um eine vorgegebene Länge heraus (Fig. 6c). Dabei gelangt das Papier P zwischen die Transportwalzenpaare 201.206, von denen hier nur das Transportwalzenpaar 201 dargestellt ist. Das Walzenpaar 201 wird in Richtung der Pfeile A2 etwa mit der gleichen Umfangsgeschwindigkeit angetrieben wie das Walzenpaar 200. Das herausgezogene Papier P wird im Schlitten 20 geführt. Ist das Papier P um die vorgegebene Länge herausgezogen, so schneidet die Schneideinrichtung 21 ein Blatt ab (Fig. 6d). Das Ende des Papierbands wird sodann mit Hilfe des Walzenpaars 200 durch Antreiben der Walzen in Richtung der Pfeile A3 wieder zurück zwischen die Leitbleche 12 geschoben, wo es gehalten wird (Fig. 6e). Anschliessend wird das Walzenpaar 200 wieder von der Transportebene weggeschwenkt (siehe Fig. 6a) und der Schlitten fährt in eine Position, in der er das abgeschnittene Blatt an die Papierbühne 30 übergeben kann. Sobald das Blatt an die Papierbühne 30 übergeben ist, kann dort die Aufbelichtung erfolgen. In dieser Zeit kann der Schlitten bereits das nächste gewünschte Blatt Papier auf die erläuterte Art und Weise bereitstellen. Dies ermöglicht eine besonders effiziente Arbeitsweise des Kopiergeräts.

In den beschriebenen Ausführungsbeispielen werden vier bzw. acht verschiedene Papiersorten bereitgestellt, wobei diese Anzahl verschiedener Papiersorten auch für die häufigsten Kundenwünsche ausreicht. Dabei betragen die Papierbreiten, die üblicherweise bereitgestellt werden, etwa 3,5 Zoll (Bildgrösse: 9cm x 13cm), 5 Zoll (Bildgrösse 10cm x 15cm) und 8 Zoll, und zwar alle Papierbreiten jeweils matt und glänzend, sowie zwei Sonderbreiten. Es können aber auch andere Papierbreiten (beispielsweise bis 12 Zoll) bereitgestellt werden. Als Kopiervorlage können dabei handelsübliche 110er-Negativfilme (Bildfeld etwa 13mm x 17mm), 135er-Negativfilme (Bildfeld etwa 24mm x 36mm) oder 120er-Negativfilme (Bildfeld etwa 56mm x 56 mm bzw. 56mm x 72 mm) dienen. Die Anordnung der Papierkassetten erfolgt so, dass die am häufigsten gewünschte Papiersorte der Papierbühne 30 an, nächsten angeordnet ist, so dass der Schlitten am geringsten oder am besten gar nicht quer verschoben werden muss. Die Kassetten mit der grössten Papierbreite wird am weitesten weg von der Papierbühne 30 angeordnet. Dies geschieht zum einen deshalb, weil diese Formate nur sehr selten gewünscht werden, zum anderen, weil bei grossen Formaten und gleicher Lichtquelle die Belichtungszeit länger ist. In diesem längeren Zeitraum während der Belichtung kann der Schlitten bereits das nächste Blatt bereitstellen. Damit dies auch bei den kleineren Formaten gewährleistet ist, bei denen die Belichtungszeiten geringer sind und damit auch der Zeitraum, in dem der Schlitten das nächste Blatt bereitstellen kann, sind die kleineren Formate näher zur Papierbühne 30 angeordnet, um die grösstmögliche Effizienz des Geräts zu erreichen. Die Anordnung von vier Kassetten in einer Anordnung ist deshalb besonders zweckmässig, weil dann die Breite des Kopiergeräts nicht so gross wird, dass das Kopiergerät nicht mehr durch Türen hindurch transportiert werden kann.

Weitere vorteilhafte Ausgestaltungen des Kopiergeräts sind denkbar. So können beispielsweise Sensoren vorgesehen sein, die anzeigen, wenn sich der Papiervorrat in einer Kassette dem Ende zuneigt bzw. wenn die Kassette leer ist. Die Trennwand 10 muss nicht durchgehend sein, es kann auch für jede Kassette eine gesonderte Trennwand vorgesehen sein, an die die Kassette ankoppelbar ist. An die Papierbühne kann sich ein weiterer Schlitten anschliessen, der ebenfalls quer zur Transportrichtung verschiebbar ist, so dass die mehrere sich anschliessende Papierentwicklungseinheit ("Nassteil") bedient werden können, da die Arbeitsgeschwindigkeit solcher Nassteile geringer ist als die der Zuführ- und der Belichtungseinheit. Weiterhin ist denkbar, das Transportwalzenpaar 200 nicht am Schlitten vorzusehen, sondern beispielsweise an der Trennwand bzw. am Leitblech, so dass jeder Kassette ein separates schwenkbares Transportwalzenpaar zum Herausziehen des Papiers zugeordnet ist. Dabei ist es dann vorteilhaft, das Wegschwenken und Hinschwenken des Walzenpaars 200 direkt mit dem Ankoppelvorgang zu koordinieren, d.h. in dem Augenblick, in dem die Kassette mit Hilfe des Ankoppelmechanismus' an die Trennwand 10 angekoppelt wird, wird auch das Walzenpaar 200 zur Transportebene hingeschwenkt bzw. beim Abkoppeln öffnet es sich entsprechend. Es ist auch denkbar, ebenfalls für jede Kassette eine eigene Schneideinrichtung 21 vorzusehen. Selbstverständlich ist es auch denkbar, weitere (also mehr als zwei) Kassettenanordnungen vorzusehen, um die Anzahl der bereitgestellten verschiedenen Papiersorten noch weiter zu erhöhen.

## Patentansprüche

1. Kopiergerät zum Aufkopieren von Kopiervorlagen auf blattartiges Kopiermaterial, mit einem Vorratsspeicher für das Kopiermaterial (P), mit einer Zuführeinrichtung (2), die das Kopiermaterial (P) vom Vorratsspeicher (1) zu einer Belichtungseinrichtung transportiert, in welcher das Aufkopieren der Kopiervorlage auf das blattartige Kopiermaterial (P) erfolgt, wobei der Vorratsspeicher (1) eine Anordnung von mehreren Kassetten (1a,1b,1c,1d) umfasst, deren Kassettenmäuler quer zur Transportrichtung des Kopiermaterials (P) nebeneinander angeordnet sind und die an eine Trennwand (10) fest ankoppelbar sind, in der eine Öffnung vorgesehen ist, durch die hindurch das Kassettenmaul geführt ist, dadurch gekennzeichnet, dass die Zuführeinrichtung (2) einen quer zur Transportrichtung des Kopiermaterials (P) verschiebbaren Schlitten (20) mit Transportwalzen (200) umfasst, der das Kopiermaterial (P) vom jeweiligen Kassettenmaul zur Belichtungseinrichtung (3) transportiert, dass auf der dem Schlitten (20) zugewandten Seite der Trennwand (10) Leitbleche (12) vorgesehen sind, zwischen denen das Ende des aus der jeweiligen Kassette kommenden Kopiermaterials (P) geführt ist und die auf ihrer dem Schlitten (20) zugewandten Seite Aussparungen (120) aufweisen, in die die am Schlitten (20) vorgesehenen Transportwalzen (200) eingreifen und das Kopiermaterial (P) aus dem jeweiligen Kassettenmaul herausziehen.

2. Kopiergerät nach Anspruch 1, dadurch gekennzeichnet, dass mindestens eine weitere Anordnung solcher Kassetten oberhalb oder unterhalb der ersten Kassettenanordnung vorgesehen ist.

3. Kopiergerät nach einem der Ansprüche 1 oder 2, dadurch gekennzeichnet, dass eine Kassettenanordnung jeweils vier nebeneinander angeordnete Kassetten (1a,1b,1c,1d) umfasst.

4. Kopiergerät nach einem der Ansprüche 1 bis 3, dadurch gekennzeichnet, dass die Zuführeinrichtung (2,2a) für jede Kassettenanordnung einen separaten Schlitten umfasst.

5. Kopiergerät nach einem der Ansprüche 1 bis 4, dadurch gekennzeichnet, dass die Kassettenanordnung Kassetten mit unterschiedlichen Kopiermaterialbreiten und/oder unterschiedlichen Kopiermaterialsorten umfasst.

6. Kopiergerät nach Anspruch 5, dadurch gekennzeichnet, dass innerhalb einer Kassettenanordnung die Kassette mit der grössten Kopiermaterialbreite an dem Rand der Kassettenanordnung angeordnet ist, der am weitesten von der Belichtungseinrichtung (3) entfernt ist.

7. Kopiergerät nach einem der Ansprüche 1 bis 6, dadurch gekennzeichnet, dass der Schlitten mit mehreren Transportwalzenpaaren (200,201,202,203,204,205,206) versehen ist, wobei zumindest dasjenige Transportwalzenpaar (200), das am nächsten zum Kassettenmaul angeordnet ist, von beiden Seiten des Kopiermaterials (P) her auf das Kopiermaterial (P) zu bzw. von diesem weg schwenkbar ist, so dass es das Kopiermaterial (P) freigibt bzw. es zum Transport aus dem Kassettenmaul herauszieht und es zwischen den Transportwalzen führt.

8. Kopiergerät nach einem der Ansprüche 1 bis 7, dadurch gekennzeichnet, dass das Kopiermaterial in den Kassetten (1a,1b,1c,1d) in Form eines langen Bands gespeichert ist, und dass der Schlitten mit einer Schneideinrichtung (21) versehen ist, welche nach dem Herausziehen einer vorgegebenen Länge an Kopiermaterial das Band zu einem blattartigen Stück schneidet und das geschnittene blattartige Stück dann der Belichtungseinrichtung (3) zuführt.

## Claims

1. Copying machine for copying originals on sheet-like copy material, with a storage reservoir for copy material (P) and a feed mechanism (2) which transports the copy material (P) from the storage reservoir (1) to an imaging unit in which the copying of the original on the sheet-like copy material (P) takes place, the storage reservoir (1) comprising a configuration of several cassettes (1a, 1b, 1c, 1d) whose cassette openings are positioned side by side perpendicular to the transport direction of the copy material (P) and which can be firmly attached to a separator wall (10) provided with an opening through which the cassette opening is passed, characterized in that the feed mechanism (2) has a carriage (20) with transport rollers (200) that can move perpendicular to the transport direction of the copy material (P) and which transports the copy material (P) from the respective cassette opening to the imaging unit (3), and in that on the side of the separator wall (10) facing the carriage (20) baffles (12) are provided, between which the end of the copy material (P) coming from the respective cassette is passed and which have recesses (120) on the side facing the carriage (20) into which the transport rollers (200) provided on the carriage (20) engage and draw the copy material (P) from the respective cassette opening.

2. Copying machine according to Claim 1, characterized in that at least one further configuration of such cassettes is provided above or below the first configuration of cassettes.

3. Copying machine according to one of Claims 1 or 2, characterized in that each configuration of cassettes comprises four cassettes (1a, 1b, 1c, 1d) positioned side by side.

4. Copying machine according to one of Claims 1 to 3, characterized in that the feed mechanism (2, 2a) has a separate carriage for each configuration of cassettes.

5. Copying machine according to one of Claims 1 to 4, charactenzed in that the cassette configuration comprises cassettes with different copy matenal widths and/or different types of copy material.

6. Copying machine according to Claim 5, characterized in that the cassette in a cassette configuration which has the largest copy material width is located at the end of the cassette configuration which is furthest from the imaging unit (3).

7. Copying machine according to one of Claims 1 to 6, characterized in that the carriage is provided with several pairs of transport rollers (200, 201, 202, 203, 204, 205, 206), while at least that pair of transport rollers (200) which is located closest to the cassette opening can be swung towards or away from the copy material (P) from both sides of the copy material (P), so that said pair of transport rollers either releases the copy material (P) or draws it out of the cassette opening for transport and passes it between the transport rollers.

8. Copying machine according to one of Claims 1 to 7, characterized in that the copy material is stored in the cassettes (1a, 1b, 1c, 1d) in the form of a long roll, and that the carriage is provided with a cutting unit (21) which cuts the roll into a sheet-like piece after a given length of copy material has been drawn out and then advances the cut sheet-like piece to the imaging unit (3).

## Revendications

1. Copieuse pour copier des originaux sur du matériau en feuilles pour enregistrement par copie ou tirage, l'appareil comportant un magasin (1) de réserve du matériau (P) pour enregistrement, un dispositif d'acheminement (2) fermé qui transporte le matériau (P) pour enregistrement du magasin (1) vers un dispositif d'éclairage pour exposition, dans lequel se produit l'enregistrement par copie de l'original sur le matériau (P) en feuilles, le magasin (1) de réserve comportant un agencement de plusieurs cassettes (1a, 1b, 1c, 1d) dont les débouchés sont disposés les uns à côté des autres transversalement par rapport à la direction de transport du matériau (P) pour enregistrement et qui peuvent être fermement fixés à une cloison ou paroi de séparation (10) dans laquelle est prévue une ouverture à travers laquelle le débouché de cassette est guidé, appareil caractérisé en ce que le dispositif d'acheminement (2) comporte un chariot (20) muni de cylindres transporteurs (200) pouvant être déplacés transversalement par rapport à la direction de transport du matériau (P), chariot qui transporte le matériau (P) de chaque débouché de cassette vers le dispositif (3) d'éclairage pour exposition, en ce que, sur le côté de la cloison (10) tourné vers le chariot (20) sont prévues des tôles (12) de guidage entre lesquelles est guidée l'extrémité du matériau (P) provenant de chaque cassette et qui présentent, sur leur côté tourné vers le chariot (20) des évidements (120) dans lesquels pénètrent les cylindres transporteurs (200) prévus sur le chariot (20) et qui retirent de chaque débouché de cassette le matériau (P) pour enregistrement par tirage de copie (s)

2. Copieuse selon la revendication 1, caractérisée en ce qu'il est prévu au moins un autre agencement de telles cassettes au-dessus ou au-dessous du premier agencement ou premier ensemble de cassettes.

3. Copieuse selon l'une des revendications 1 ou 2, caractérisée en ce qu'un agencement de cassettes comporte à chaque fois quatre cassettes (1a, 1b, 1c, 1d) disposées l'une à côté de l'autre.

4. Copieuse selon l'une des revendications 1 à 3, caractérisée en ce que le dispositif d'acheminement (2, 2a) comporte un chariot séparé pour chaque agencement ou ensemble de cassettes.

5. Copieuse selon l'une des revendications 1 à 4, caractérisée en ce que l'agencement des cassettes comporte des cassettes présentant des largeurs différentes du matériau pour enregistrement par copie ou tirage et/ou des sortes différentes de matériaux pour copie.

6. Copieuse selon la revendication 5, caractérisée en ce qu'à l'intérieur d'un agencement ou ensemble de cassettes,la cassette présentant la plus grande largeur de matériau pour enregistrement est disposée au bord de l'agencement ou ensemble de cassettes qui est le plus éloigné du dispositif (3) d'éclairage pour exposition.

7. Copieuse selon l'une des revendications 1 à 6, caractérisée en ce que le chariot est doté de plusieurs paires de cylindres transporteurs (200, 201, 202, 203, 204, 205, 206), de sorte qu'au moins la paire de cylindres transporteurs (200), disposée le plus près du débouché de cassette, peut pivoter des deux côtés du matériau (P) pour enregistrement par copie pour se rapprocher de ce matériau (P) ou s'en éloigner, de sorte qu'elle libère la matériau (P) pour copie ou le retire du débouche de cassette pour le transporter et le guide entre les paires de cylindres transporteurs.

8. Copieuse selon l'une des revendications 1 à 7, caractérisée en ce que le matériau pour copie est conservé dans les cassettes (1a, 1b, 1c, 1d) sous forme d'une longue bande, et en ce que le chariot est doté d'un dispositif de coupe (21) qui coupe, après le retrait d'une longueur prédéterminée de matériau pour copie, la bande en un morceau en forme de feuille et qui achemine ensuite le morceau en forme de feuille, ainsi découpé, vers le dispositif d'éclairage pour exposition (3).
